# EUROPEAN PATENT SPECIFICATION

(11) **EP 1 289 703 B1**
(45) Date of publication and mention of the grant of the patent: **10.11.2010**
(21) Application number: 01934733.5
(22) Date of filing: 14.05.2001
(51) Int. Cl.: B23C 5/26

(54) **TOOL COUPLING**
WERKZEUGKUPPLUNG
COUPLAGE D'OUTILS

(30) Priority: 18.05.2000 SE 0001825
(43) Date of publication of application: 12.03.2003
(73) Proprietor: Sandvik Intellectual Property AB, 811 81 Sandviken (SE)
(72) Inventor: HANSSON, Per, S-805 96 Gävle (SE); SJÖÖ, Sture, S-805 92 Gävle (SE)
(86) International application number: PCT/SE2001/001054
(87) International publication number: WO 2001/087525

(56) References cited:
- US-A- 5 150 636
- US-A- 5 551 811
- US-A- 5 607 263

## Description

### Technical Field of the Invention

The present invention relates to a tool coupling, preferably for rotary tools, intended to rotate around a axis of rotation, the tool coupling couples together a fastening part, denominated adaptor, and a tool body which is intended to carry cutting inserts for chip removing machining, the tool coupling comprising a male part and a female part, which parts are intended to be received in each other. The invention also separately relates to a male part and a female part.

### Prior Art

A coupling element which is possible to couple together with another member for transmission of a rotation movement there between, in which said coupling element, for instance, may consist of a screw head is previously known from US-A-3 584 667.

The coupling element according to US-A-3 584 667 comprises a first series of spaced-apart, partially cylindrical convex surfaces and a second series of partially cylindrical concave surfaces alternating with the surfaces of the first series and connecting tangentially thereto. The radius of curvature of the partially cylindrical concave part surfaces included in the second series is considerable larger than the radius of curvature of the partially cylindrical convex part surfaces included in the first series. Screws with screw heads formed as coupling elements according to US-A-3 584 667 are marketed under the trademark TORX®. During the transmission of a rotation movement, a socket wrench having a corresponding, although inverted, design as the screw head is, for instance, used, said socket wrench being attached to the screw head. The so-called TORXO system enables transfer of high torques between socket wrench and screw head. The TORX® system also comprises screw heads having countersunk holes featuring the TORX® configuration.

A replaceable cutting body, a so-called loose top that is attached to a shaft is previously known from DE-OS 34 02 547. The connection between the cutting body and the shaft is formed in such a way that three radial grooves are recessed in the end of the shaft turned towards the cutting body while three radial ridges are arranged on the cutting body. In the active position of the connection, an axial screw extends through the cutting body and into the shaft, the ridges being received in the grooves. Thereby, a torque may be transferred from the shaft to the cutting body. By virtue of the relatively flat inclination of the co-operating flanks of the grooves and the ridges, a relatively high axial force is required between the shaft and the cutting body in order to transfer torque of the magnitude desired in this connection from the shaft to the cutting body. The high axial force may lead to an elongation of the screw. Furthermore, it is difficult to define where between the ridges and grooves abutment will take place since these have a linear extension.

US-A-5 150 636 discloses a rock drill bit having a shant and a replaceable cutting head forming female and male parts. However, the male part can have a reverse taper.

### Aims and Feature of the Invention

A primary aim of the present invention is to describe a tool coupling of the kind defined in the introduction of the independent claim 1, the tool coupling being capable of transmitting large torques.

Another aim of the present invention is that also at a moderate axial pre-tension, there is to be an exceptionally small risk of the transmission of torque failing to work.

Yet another aim of the present invention is that the tool coupling should be self-centring.

An additional aim of the present invention is that according to one embodiment of the tool coupling, the same is to be free of play.

At least the primary the aim of the present invention is realised by means of a tool coupling having the features given in the subsequent, independent claim 1. Preferred embodiments of the invention are defined in the dependent claims.

### Short Description of the Drawings

Embodiments of tool couplings according to the present invention will be described below, reference being made to the accompanying drawings, where:
- Fig 1: shows a perspective view from behind of a slitting cutter body, which is provided with a male part of a tool coupling according to the present invention;
- Fig 2: shows a side view of the slitting cutter body according to Fig 1;
- Fig 3: shows a perspective view of a shaft, which is provided with a female part of the tool coupling according to the present invention;
- Fig 4: shows an exploded view of the parts included in a tool coupling according to the present invention, which parts consist of the slitting cutter body according to Fig 1, the shaft according to Fig 2 as well as a bolt;
- Fig 5: shows a side view of the tool coupling according to the present invention in an assembled state,
- Fig 6: the slitting cutter body and the shaft being connected via said tool coupling; shows a section along A-A in Fig 8 through a contact area between the male and female parts included in the tool coupling in an assembled state;
- Fig 7: shows a loose top of a milling cutter, which is provided with a male part included in the tool coupling according to the present invention;
- Fig 8: shows in detail how two teeth co-operate in a tool coupling according to the present invention; and
- Fig 9-13: shows additional embodiments of teeth that are included in a tool coupling according to the present invention.

### Detailed Description of Preferred Embodiments of the Invention

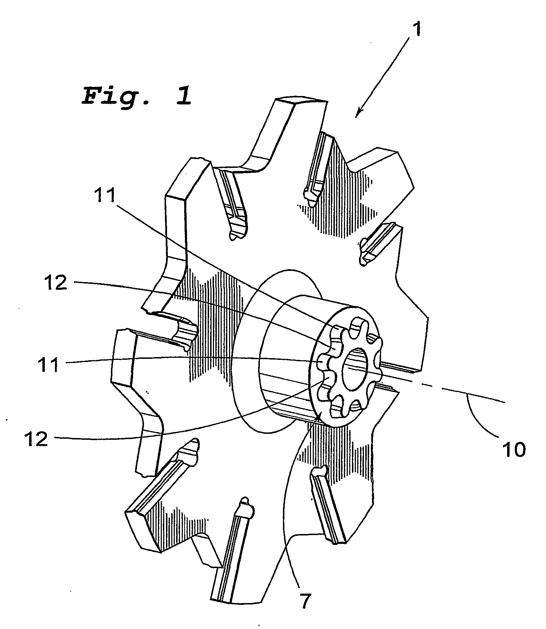

The tool coupling according to the present invention illustrated in Figs 1-5 is arranged in connection with a first rotary tool 1 in the form of a slitting cutter, which comprises an adaptor in the form of a slitting cutter body 3 as well as a tool body in the form of a shaft 5, the slitting cutter body 3 and the shaft 5 being connected by means of a tool coupling according to the present invention. Said tool coupling comprises a male part 7 and a female part 9, the same being formed to be received in each other and to force-wise co-operate with each other for the transmission of torque between the shaft 5 and the slitting cutter body 3, which have a common axis of rotation 10.

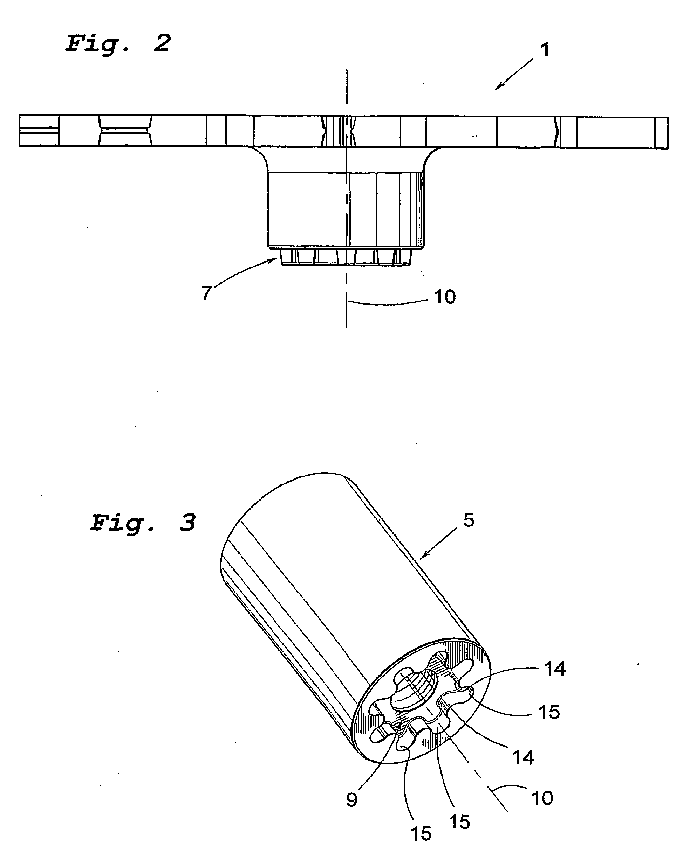

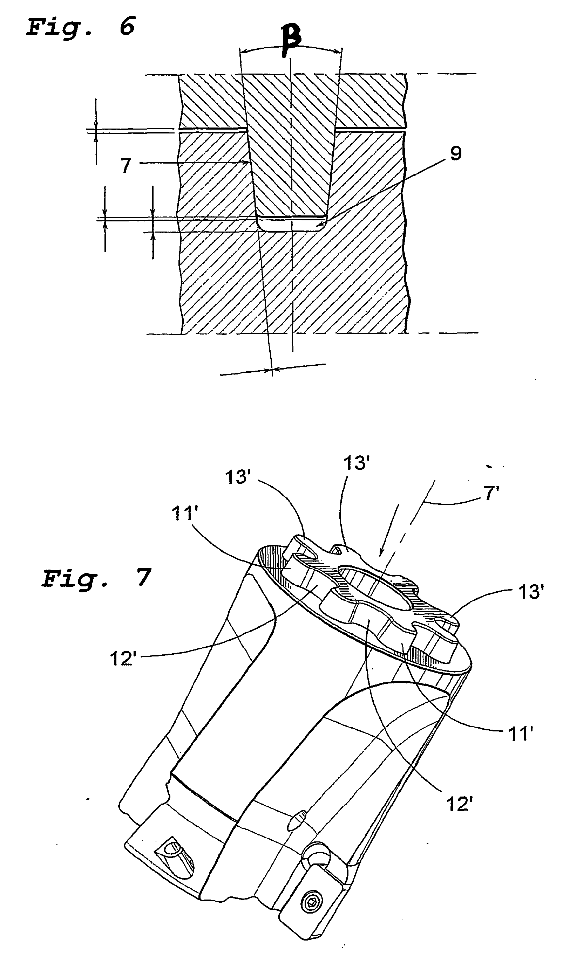

The male part 7, which is most clearly seen in Fig 1, comprises a number of first teeth 11, which are spaced-apart from each other, and which form a tangent to an imaginary circle having the centre on the axis of rotation 10, and are directed away from said axis of rotation 10. The first teeth 11 are spaced-apart by a number of first recesses 12, which also are spaced-apart from each other, and which form a tangent to an imaginary circle having the centre on the axis of rotation 10, and are directed away from said axis of rotation 10. As is most clearly seen in Fig 2, the male part 7 has a slightly conical shape. The cone angle β, see Fig 6, is of the order of 1°-30°, preferably 2°-14°. In the centre of the male part 7, a first cylindrical hole 6 is recessed having the centre thereof on the axis of rotation 10.

The female part 9, which is most clearly seen in Fig 3, is formed to fit with the male part 7, i.e. the male part 7 should be received in the female part 9. Correspondingly, as for the male part 7, the female part 9 comprises a number of second teeth 14, which are spaced-apart from each other, and which form a tangent to an imaginary circle having the centre on the axis of rotation 10, and are directed towards said axis of rotation 10. The second teeth 14 are spaced-apart by a number of second recesses 15, which also are spaced-apart from each other, and which form a tangent to an imaginary circle having the centre on the axis of rotation 10, and extend in the direction of said axis of rotation 10. As is seen in Fig 3, also the female part 9 has a slightly conical shape, with conicity equalling the conicity of the male part 7. In the centre of the female part 9, a second, internally threaded, cylindrical hole 8 is recessed having the centre thereof on the axis of rotation 10.

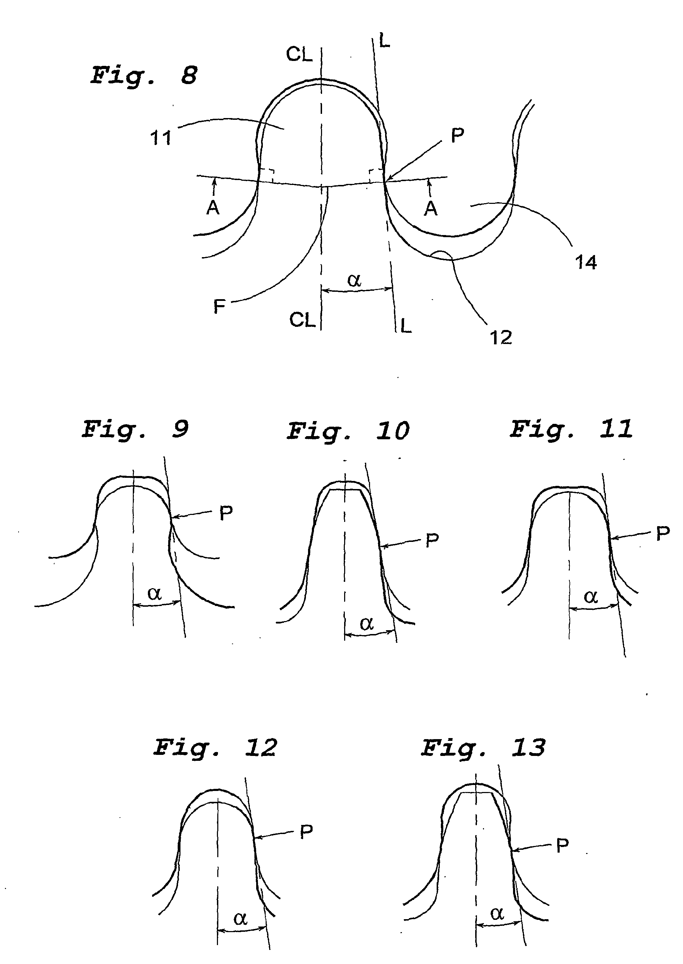

In the embodiment according to Figs 1-5, the teeth 11, 14 have a convex free end and the recesses 12, 15 have a concave bottom. However, the shape of the teeth 11, 14 and the recesses 12, 15 can vary widely within the scope of the invention, which is illustrated in Figs 9-13.

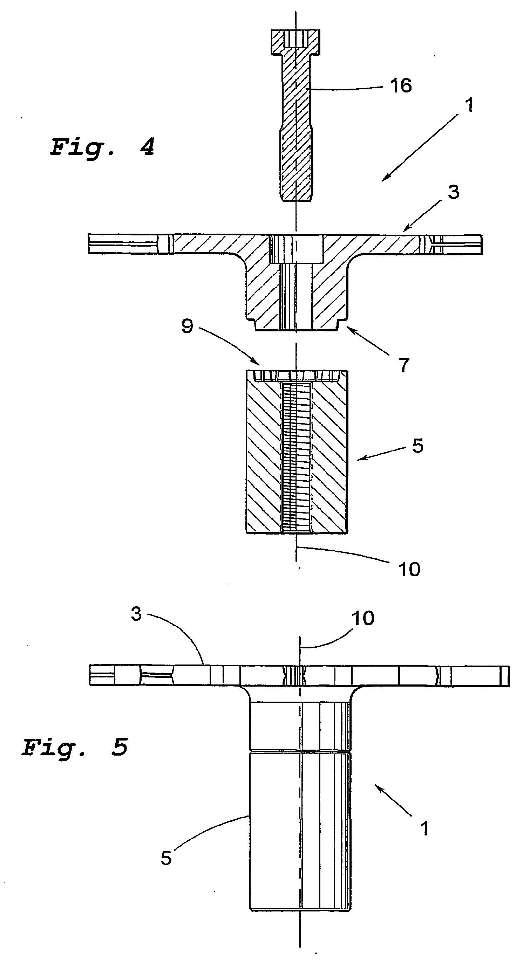

In Fig 5, the tool 1, i.e. the slitting cutter, is shown in an assembled state, which means that the shaft 5 and the slitting cutter body 3 are connected to each other, this connection having been achieved by means of a screw 16, which applies an axial force to the male part 7 included in the tool coupling and to the female part 9 included in the tool coupling.

In Fig 6, the cut A-A in Fig 8 through the contact area for the mutual abutment between the male part 7 and the female part 9 is shown, at which direct abutment take place between the conical surfaces while there is a limited play between the surfaces of the tool coupling according to the present invention situated farthest away from centre of rotation. There is greater play between the end surface of the male part 7 and the bottom of the female part 9. This means that at additional axial displacement of the male part 7 and the female part 9 towards each other, the surfaces situated outermost from the centre of rotation will come to abutment against each other, while the opposite surfaces of the male part 7 and the female part 9 will not be in contact with each other. Due to the fact that abutment takes place at the surfaces situated outermost from the centre of rotation, an increased stability.of the tool coupling is obtained, especially pertaining to bending loads, in comparison with if the opposite surfaces of the male part 7 and of the female part 9 abut against each other.

In Fig 7, a so-called loose top 3' of a tool 1' in the form of a milling cutter is shown. The loose top 3' has a male part 7' of a tool coupling according to the present invention, said male part 7' having principally the same design as the above-described male part 7. This means that the male part 7' comprises a number of first teeth 11', which are spaced-apart from each other, and which form a tangent to an imaginary circle having the centre on the axis of rotation 10', and extend in the direction away from said axis of rotation 10'. The first teeth 11' are spaced-apart by a number of first recesses 12', which also are spaced-apart from each other, and which form a tangent to an imaginary circle having the centre on the axis of rotation 10', and extend in the direction of said axis of rotation 10'. Correspondingly as for the male part 7, the male part 7' has a slightly conical shape.

The loose top 3' is intended to be mounted on a tool body (not shown), said tool body being provided with a female part fitting to the male part 7', which female part principally has the same design as the female part 9.

In Figs 8-13, a number of embodiments of co-operating teeth and respective recesses are shown which are included in the tool coupling according to the present invention, i.e. the illustrated.tooth is normally included in a male part while the illustrated recess normally is included in a female part.

In Fig 8, a detail of a tooth 11 of the male part 7 and a tooth 14 of the female part 9 is shown. In the above-described embodiments, the female part 9 imparts a rotation to the male part 7 due to the fact that the tooth 14 of the female part 9 is in contact with the tooth 11 of the male part 7. In doing so, one or more contact areas P arise between these co-operating teeth 11 and 14. With a driving angle α, it should in this connection be understood the angle α which is formed between a line L which is perpendicular to the plane of force F in the contact area P between the teeth 11, 14 as well as a symmetry line CL for the tooth 11 of the male part 7.

In Figs 9-13, the driving angles α are drawn in for different embodiments of teeth and co-operating recesses of the male part 7 and the female part 9 according to the present invention. As is seen in Figs 9-13, a tooth and the co-operating recess do not need to have a shape corresponding to each other. In this connection, the essential is that a contact area P is formed between the teeth 11 and 14, at which there in principle does not have to be any mutual abutment between the teeth and the appurtenant recess besides said contact area P. According to the invention, the driving angle α, as it is defined in Fig 8, should be in the interval -5° - +45°, preferably -2° - +25°.

The number of teeth of the male part 7; 7' and the female part 9, respectively, should be 4-12, preferably 6-8.

As a general rule a tool coupling having a conical male and female part is especially suitable for high spindle speeds (approx. 15 000-25 000 rpm).

### Feasible Modifications of the Invention

In the above-described embodiments, the male parts and female parts are formed with identical teeth around the entire circumference thereof. However, it is also feasible within the scope of the present invention that the teeth of the male part and the female part according to the present invention have a different design along the circumference of the male part and female part, respectively. Thereby, a guiding of mutual indexing of the male part and female part can take place, i.e. they only fit together in a limited number of positions.

In the above-described embodiments, all teeth have an equally large extension from the axis of rotation 10; 10'. However, it is also feasible within the scope of the present invention that some tooth or teeth have an extension from the axis of rotation 10; 10' deviating from the other teeth. This may, for instance, be the case if the tool coupling is desired to be indexed to a special position.

The above-described embodiments of rotary tool bodies are intended to be equipped with loose cutting inserts for chip removing machining, said cutting inserts being received in suitably formed tool holders of the tool. However, it is also possible within the scope of the present invention that the cutting members are integrated in the tool body.

In the above-described embodiments, the male part 7; 7' is situated on the part of the tool which carries the cutting members for chip removing machining, while the female part 9 is received in the tool body/shaft proper 5. However, it is also possible within the scope of the present invention that the male part 7; 7' is situated on the tool body/shaft 5, while the female part 9 is received in the part of the tool which carries the cutting members for chip removing machining.

In the above-described embodiments, the male part 7; 7' and the female part 9 are slightly conical while it is fully possible within the scope of the present invention that male part and the female part are generally cylindrical. In this connection, it should, however, be pointed out that with a cylindrical variant it is difficult to provide a coupling free of play, which, however, is obtained if the male part and the female part are slightly conical.

Above, the tool coupling according to the present invention has been described in connection with a slitting cutter and a milling cutter. However, this only constitutes examples of tools where the tool coupling according to present may be applied. Additional feasible applications for the tool coupling according to the present invention are other types of milling cutters, drills with loose tops, broaches. The listing is only exemplifying.

### List of reference designations

- 1: slitting cutter
- 1': milling cutter
- 3: slitting cutter body
- 3': loose top
- 5: shaft
- 7: male part
- 7': male part
- 8: cylindrical hole
- 9: female part
- 10: common axis of rotation
- 10': common axis of rotation
- 11: first teeth
- 11': first teeth
- 12: first recess
- 12': first recess
- 14: second teeth
- 15: second recess
- 16: screw

## Claims

1. Tool coupling, preferably for rotary tools (1; 1'), which are intended to rotate around an axis of rotation (10; 10'), the tool coupling couples together a tool body (5; 5') and a part which carries cutting inserts for chip removing machining, the tool coupling comprising a male part (7; 7') and a female part (9), which are intended to be received in each other, plus element (16) which holds together the male part (7; 7') and female part (9) in the axial direction of the tool coupling, wherein the male part (7; 7') comprises a number of first teeth (11; 11') extending in the direction from the axis of rotation (10; 10'), which teeth are spaced-apart from each other by a number of first recesses (12; 12') extending in the direction of the axis of rotation (10; 10'), which recesses are situated between the teeth (11; 11') and interconnect the same, that the female part (9) comprises a number of second teeth (14) protruding in the direction of the axis of rotation (10), which teeth are spaced-apart from each other by a number of second recesses (15) extending in the direction from the axis of rotation (10), which are situated between the teeth, **characterized in that** the driving angle (α) in the contact point between the teeth (11, 14; 11') of the male part (7, 7') and the female part(9), respectively, is in the interval - 5° - +45°, preferably -2° - +25° and that the male part (7; 7') and female part (9) are slightly conical, wherein the male part narrows forward an end thereof, which is intended to be inserted in the female part.

2. Tool coupling according to claim 1, **characterized in that** the teeth (11; 11') form a tangent to a first imaginary circle having the centre on the axis of rotation (10; 10'), and that the recesses (12; 12') form a tangent to a second imaginary circle having the centre on the axis of rotation (10; 10').

3. Tool coupling according to anyone of claims 1 and 2, **characterized in that** the teeth (11, 14; 11') and recesses (12, 15; 12') are arranged with constant pitch around the axis of rotation (10; 10').

4. Tool coupling according to anyone of claims 1-3, **characterized in that** the teeth (11, 14; 11') have convex free ends, and that the recesses (12, 15) have concave bottoms.

## Patentansprüche

1. Werkzeugkupplung, vorzugsweise für drehende Werkzeuge (1; 1'), die dafür vorgesehen sind, um eine Rotationsachse (10; 10') zu drehen, wobei die Werkzeugkupplung einen Werkzeugkörper (5; 5') und einen Teil miteinander verbindet, welcher Schneideinsätze für die spanabhebende Bearbeitung trägt, wobei die Werkzeugkupplung einen männlichen Teil (7; 7') und einen weiblichen Teil (9) aufweist, die dafür vorgesehen sind, ineinander aufgenommen zu werden, zuzüglich eines Elements (16), welches den männlichen Teil (7; 7') und den weiblichen Teil (9) in axialer Richtung der Werkzeugkupplung zusammenhält, wobei der männliche Teil (7; 7') eine Anzahl erster Zähne (11; 11') aufweist, die sich in Richtung von der Rotationsachse (10; 10') aus erstrecken, wobei die Zähne voneinander durch eine Anzahl erster Aussparungen (12; 12') voneinander getrennt sind, die sich in Richtung der Rotationsachse (10; 10') erstrecken, wobei diese Aussparungen zwischen den Zähnen (11; 11') liegen und dieselben miteinander verbinden, wobei der weibliche Teil (9) eine Anzahl zweiter Zähne (14) aufweist, die in Richtung der Rotationsachse (10) hervorstehen, wobei diese Zähne voneinander durch eine Anzahl von zweiten Aussparungen (15) beabstandet sind, die sich in Richtung von der Rotationsachse (10) aus erstrecken, und welche zwischen den Zähnen liegen, **dadurch gekennzeichnet, dass** der Antriebswinkel im Kontaktpunkt zwischen den Zähnen (11, 14; 11') des männlichen Teils (7; 7') bzw. des weiblichen Teils (9) in dem Intervall von -5° bis +45°, vorzugsweise in dem Intervall von -2° bis +25° liegt, und dass der männliche Teil (7; 7') und der weibliche Teil (9) leicht konisch sind, wobei der männliche Teil sich in Richtung seines einen Endes verjüngt, welches dafür vorgesehen ist, in das weibliche Teil eingesetzt zu werden.

2. Werkzeugkupplung nach Anspruch 1, **dadurch gekennzeichnet, dass** die Zähne (11; 11') bezüglich eines ersten imaginären Kreises, dessen Zentrum auf der Rotationsachse (10; 10') liegt, eine Tangente bilden, und dass die Aussparungen (12; 12') eine Tangente an einen zweiten imaginären Kreis bilden, dessen Zentrum auf der Rotationsachse (10; 10') liegt.

3. Werkzeugkupplung nach einem der Ansprüche 1 oder 2, **dadurch gekennzeichnet, dass** die Zähne (11, 14; 11', ) und Aussparungen (12, 15; 12') mit einem konstanten Wiederholabstand um die Rotationsachse (10; 10') herum angeordnet sind.

4. Werkzeugkupplung nach einem der Ansprüche 1 bis 3, **dadurch gekennzeichnet, dass** die Zähne (11, 14; 11') konvexe freie Enden haben und dass die Aussparungen (12, 15) konkave Grundflächen haben.

## Revendications

1. Dispositif de couplage d'outils de préférence de couplage d'outils rotatifs destinés à pivoter autour d'un axe de rotation (10; 10'), le dispositif de couplage d'outils couplant, ensemble, un corps d'outil (5; 5') et une partie qui soutient des inserts de coupe pour l'usinage par enlèvement de copeaux, le dispositif de couplage d'outils comprenant une partie mâle (7; 7') et une partie femelle (9) qui sont destinées à être reçues l'une dans l'autre, plus un élément (16) qui tient ensemble la partie mâle (7; 7') et la partie femelle (9) dans la direction axiale du dispositif de couplage, dans lequel la partie mâle (7; 7') comprend un nombre de premières dents (11; 11') s'étendant dans la direction partant de l'axe de rotation (10; 10'), lesquels dents sont espacées les unes des autres par un nombre de premiers évidements (12; 12') s'étendant dans la direction de l'axe de rotation (10; 10'), lesquels évidements (12; 12') sont situés entre les dents (11; 11') et relient celles-ci, dans lequel la partie femelle (9) comprend un nombre de secondes dents (14) faisant saillie dans la direction de l'axe de rotation (10), lesquels dents sont espacées les unes des autres par un nombre de seconds évidements (15) s'étendant dans la direction partant de l'axe de rotation (10) et qui sont situés entre les dents, **caractérisé en ce que**
l'angle d'attaque (α) dans le point de contact entre les dents (11, 14; 11') de la partie mâle (7, 7') et la partie femelle (9), respectivement, est dans l'intervalle de -5° à + 45°, de préférence, dans l'intervalle de -2° à +25 °, et **en ce que** la partie mâle (7 ; 7') et la partie femelle (9) sont légèrement conique, dans lequel la partie mâle se rétrécit vers une extrémité de celui-ci, qui est destinée à être insérée dans la partie femelle.

2. Dispositif de couplage selon la revendication 1, **caractérisé en ce que** les dents forment une tangente à un premier cercle imaginaire ayant son centre sur l'axe de rotation (10 ; 10'), et **en ce que** les évidements (12 ; 12') forment une tangente à une second cercle imaginaire ayant son centre sur l'axe de rotation (10 : 10').

3. Dispositif de couplage selon l'une quelconque des revendications 1 ou 2, **caractérisé en ce que** les dents (11, 14 ; 11') et les évidements (12, 15 ; 12') sont disposés avec un pas constant autour de l'axe de rotation (10 ; 10').

4. Dispositif couplage selon l'une quelconque des revendications 1 à 3, **caractérisé en ce que** les dents (11, 14 ; 11') ont des extrémités convexes libres, et **en ce que** les évidements (12, 15) ont des fonds concaves.
